**Europäisches Patentamt**

(19) **European Patent Office**

**Office européen des brevets**

(11) Numéro de publication : **0 330 549 B1**

(12) **FASCICULE DE BREVET EUROPEEN**

(45) Date de publication du fascicule du brevet :
15.01.92 Bulletin 92/03

(51) Int. Cl.⁵ : **G01N 17/00**

(21) Numéro de dépôt : **89400432.4**

(22) Date de dépôt : **16.02.89**

(54) **Dispositif de mesure en continu par électrochimie de la vitesse de corrosion dans un fluide.**

(30) Priorité : **19.02.88 FR 8802009**

(43) Date de publication de la demande :
**30.08.89 Bulletin 89/35**

(45) Mention de la délivrance du brevet :
**15.01.92 Bulletin 92/03**

(84) Etats contractants désignés :
**CH DE GB IT LI**

(56) Documents cités :
**EP-A- 0 193 735**
**EP-A- 0 195 982**
**US-A- 3 073 154**
**US-A- 3 504 323**
**US-A- 4 627 905**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**
Titulaire : **CFG-COMPAGNIE FRANCAISE POUR LE DEVELOPPEMENT DE LA GEOTHERMIE ET DES ENERGIES NOUVELLES**
**39-43 Quai André Citröen**
**F-75739 Paris (FR)**

(72) Inventeur : **Plante, Georges**
**34 av. du Général Leclerc**
**F-92260 Fontenay-aux-Roses (FR)**
Inventeur : **Goyeneche, Olivier**
**79 rue de Coulmiers**
**F-45000 Orleans (FR)**
Inventeur : **Fargues, Jean-Pierre**
**22 rue Edmond Rostand**
**F-91420 Morangis (FR)**

(74) Mandataire : **Mongrédien, André et al**
**c/o BREVATOME 25, rue de Ponthieu**
**F-75008 Paris (FR)**

## Description

L'invention concerne la mesure en continu, par électrochimie, de la vitesse de corrosion par des fluides circulant dans des canalisations.

Dans les installations destinées au transport de certains fluides, par exemple les fluides géothermaux, la connaissance en temps réel de la vitesse de corrosion de l'installation permet de déclencher l'addition de produits inhibiteurs vis-à-vis de cette corrosion, dès que l'installation se corrode à une vitesse trop élevée. Cette connaissance permet également d'optimiser ces additions de produits, qui sont généralement très coûteuses. Plus généralement, elle permet de déclencher toute action curative ou préventive dès qu'elle est nécessaire.

Des méthodes électrochimiques sont employées pour connaître à chaque instant la vitesse de corrosion, et sont par ailleurs d'une mise en oeuvre relativement facile. Ces méthodes sont particulièrement développées dans les installations pétrolières. Elles consistent à faire passer un faible courant électrique entre des électrodes, généralement taillées dans le même métal que l'installation considérée et soumises au même milieu environnant. Les conditions opératoires sont telles que ce courant est proportionnel à la vitesse de corrosion du métal, à l'endroit où sont placées les électrodes de mesure. On trouve dans le commerce des électrodes et des porte-électrodes, associés à des dispositifs permettant de les introduire dans des canalisations.

Un premier type de ce genre de système utilise plusieurs électrodes métalliques longitudinales placées de façon parallèle, les unes à côté des autres. Un deuxième type de système utilise des électrodes concentriques rapprochées et noyées dans un matériau solide non conducteur, les électrodes ne sont alors en contact avec le fluide que par leur section transversale.

Un troisième type de dispositif est décrit dans le brevet américain n° US-3616415. En référence à la figure 1, ce brevet décrit une sonde axiale de mesure de corrosion comprenant une base métallique 2, des électrodes 4, des pièces d'isolement 6 et une pièce terminale 8. Les pièces d'isolement 6 sont intercalées entre des pièces métalliques constituant les électrodes 4 et s'emboîtent dans celles-ci. Les électrodes 4 et les pièces d'isolement 6 sont percées d'un trou central dans lequel passent des fils électriques 10. Par ce trou est également introduit un produit, par exemple un élastomère, qui remplit et bouche tous les trous et fissures, par lesquels le fluide extérieur pourrait s'infiltrer. Les pièces d'isolement 6 sont percées pour faciliter la sortie de l'élastomère. La forme donnée aux pièces permet de réaliser des emboîtements. De plus, les pièces d'isolement 6 sont de diamètre inférieur, de façon à ce que celles-ci soient enrobées afin de réaliser une sonde cylindrique, où seuls sont apparents les électrodes et l'élastomère remplissant les espaces vides.

Le principal inconvénient de ces sondes, lorsqu'elles sont placées dans certains milieux, et en particulier dans les fluides géothermaux, est qu'elles deviennent très rapidement inopérantes. En effet, des dépôts de sulfures de fer, conducteurs de l'électricité, apparaissent sur la surface extérieure de la sonde, et mettent en court-circuit les électrodes.

De tels dispositifs ne permettent donc que des mesures discontinues. De plus, celles-ci sont obtenues sur des électrodes venant d'être immergées et dont la surface est par conséquent très différente de celle des canalisations.

Le but de l'invention est de proposer une sonde de mesure de la corrosion par un fluide, applicable notamment dans les installations géothermiques, et assurant une isolation électrique complète et durable entre les électrodes de la sonde, même lorsqu'on l'utilise dans un fluide géothermique.

A cet effet, l'objet principal de l'invention est un dispositif de mesure en continu de la vitesse de corrosion par un fluide par électrochimie. Il comprend un support longitudinal, au moins deux électrodes placées sur le support longitudinal. Ces électrodes ont un diamètre déterminé et sont au contact du fluide. Le dispositif comprend également des moyens de connexion électrique de ces électrodes, protégés du fluide, et des séparateurs placés entre elles pour les isoler électriquement.

Une caractéristique principale de l'invention est que ces séparateurs sont en contact avec le fluide, ont au moins une partie dont le diamètre maximal est plus important que celui des électrodes et ont une surface extérieure discontinue, ceci pour créer une discontinuité des éventuels dépôts de matériaux conducteurs, sur la surface externe du dispositif de mesure.

Dans le cas où le dispositif a une surface externe de révolution, une réalisation préférentielle de l'invention prévoit que les séparateurs ont une forme lenticulaire. Cette forme permet en effet de réaliser une surface externe particulièrement discontinue et constitue un obstacle efficace à l'apparition d'un dépôt continu sur la surface du dispositif. Les séparateurs peuvent être également formés de plusieurs lentilles contiguës.

Comme l'assemblage des éléments séparateurs et des électrodes constitue un empilement, l'invention prévoit un dispositif de serrage avec rattrapage de jeu placé à au moins une extrémité du dispositif de mesure. Un tel rattrapage de jeu permet un serrage constant de l'empilement garantissant ainsi l'étanchéité de l'ensemble, malgré un éventuel fluage du matériau constituant les séparateurs.

Selon une première réalisation, l'invention prévoit que le support longitudinal est une tige centrale autour de laquelle est enroulé en hélice un ruban de fils électriques constituant les moyens de connexion électrique des électrodes.

Selon une deuxième réalisation, l'invention prévoit que ce support longitudinal est une tige centrale avec des cannelures longitudinales dans lesquelles sont logés les fils électriques. On prévoit également que ces fils électriques sont maintenus sur la tige principale par des bagues de gaine thermorétractable, le fil électrique de chaque électrode étant dénudé au niveau de l'électrode correspondante. La partie dénudée du fil électrique est alors placée au-dessus de la bague de gaine pour être en contact avec l'électrode correspondante.

Enfin, une réalisation particulière prévoit que les séparateurs sont en PTFE.

L'invention et ses caractéristiques seront mieux comprises à la lecture de la description suivante, qui est annexée des figures représentant respectivement :
— figure 1, une sonde de mesure de corrosion selon l'art antérieur ;
— figure 2, un dispositif de mesure de corrosion selon l'invention ;
— figure 3, une coupe transversale de la tige centrale dans une variante de réalisation du dispositif selon l'invention.

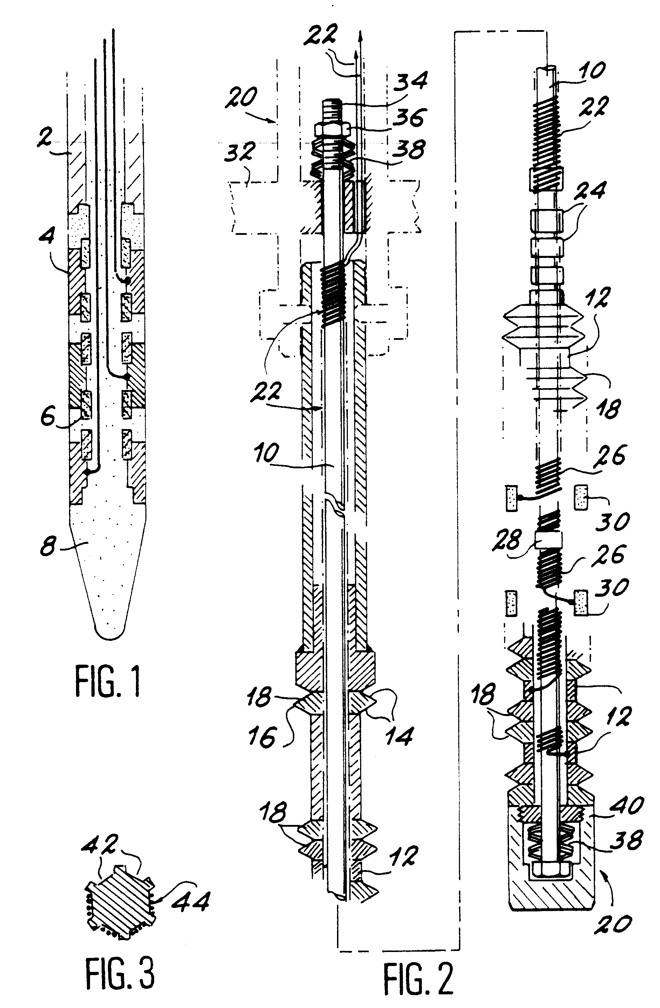

La figure 2 représente en détail le dispositif de mesure selon l'invention. Ce dispositif de mesure affecte une forme générale allongée. Il comprend un support longitudinal 10 pour supporter les différents éléments du dispositif. Les éléments opérationnels du dispositif de mesure sont des électrodes 12 placées sur le support longitudinal 10, et maintenues à des potentiels électriques déterminés.

En effet, les mesures électrochimiques de la corrosion requièrent la présence d'électrodes de même nature que les éléments de l'installation dont on veut connaître le comportement. Le dispositif permet la mise en oeuvre des méthodes stationnaires et transitoires. On rappelle ci-dessous, à titre d'exemple, la méthode dite "des résistances de polarisation".

La corrosion d'une canalisation métallique, et plus précisément d'une canalisation en acier, se traduit par le passage d'atomes de fer vers la solution. Ceux-ci transportent chacun une charge électrique connue, la mesure du courant correspondant suffirait pour évaluer la quantité de fer passant en solution. En fait, on ne peut pas connaître directement ce courant car, en contre-partie de chaque charge électrique enlevée au métal par la corrosion, une charge égale lui est restituée par une réaction de la solution ou des espèces dissoutes.

La technique consiste donc à utiliser au moins deux électrodes et à les relier à une source de courant, de telle sorte que celui-ci entre dans la solution par l'une (celle qui se corrode) et en sorte par l'autre.

De cette manière, on peut mesurer le courant correspondant à la corrosion.

Plus précisément, on mesure d'abord la différence de potentiel entre l'électrode à corroder et une autre électrode qui sert de repère. Puis, au moyen d' une source de courant réglable, on fait passer un courant i tel que la différence du potentiel ci-dessus augmente de V millivolts. Le rapport R = V/i est appelé résistance de polarisation. Pour une même valeur de V, le courant i est plus grand si la corrosion est plus forte puisque les charges électriques sont portées par les atomes de fer qui passent en solution.

Dans de nombreux cas, ce courant est proportionnel à la vitesse de corrosion au moment de la mesure, et, par conséquent, la résistance de polarisation est inversement proportionnelle à celle-ci.

Le dispositif de mesure comprend également des moyens de connexion électrique de ces électrodes, et des séparateurs 18, placés entre les électrodes 12, afin d'isoler électriquement ces dernières.

Une caractéristique principale de l'invention est de créer entre chaque électrode 12, sur la face externe du dispositif de mesure, des surfaces de forme et de dimension telles que les éventuels dépôts conducteurs sur la surface externe du dispositif de mesure ne court-circuitent pas les électrodes 12. En effet, et en particulier dans le cas de la géothermie, les fluides pour lesquels est utilisée une sonde de mesure de la corrosion, peuvent être porteurs de corps conducteurs de l'électricité ou d'espèces susceptibles de former de tels corps avec l'acier. Ces derniers, au bout d'un certain temps, se déposent ou se forment en quantité suffisante, de telle sorte qu'ils réalisent des dépôts susceptibles de mettre en court-circuit les électrodes du dispositif de mesure. L'invention prévoit de réaliser une discontinuité dans ces dépôts, qui eux sont inévitables. A cet effet, la surface externe du dispositif de mesure, entre chaque électrode 12, est partagée en au moins deux surfaces 14 différentes et adjacentes par une arête 16 d'un angle suffisamment aigu pour qu'il n'y ait pas de dépôt au niveau de cette arête. On a donc prévu d'utiliser les séparateurs 18 pour réaliser cette forme en saillie entre chaque électrode 12. Les électrodes 12 ont un diamètre déterminé. Les séparateurs 18 ont donc un diamètre maximal plus important que celui des électrodes 12. La surface externe du dispositif de mesure étant de révolution, les séparateurs 18 peuvent donc avoir une forme lenticulaire.

Les séparateurs étant en contact avec le fluide, ils remplissent également le rôle de joint d'étanchéité. Ce rôle est facilité par le fait que ces séparateurs 18 sont en polytétrafluoroéthylène, plus connu sous l'abréviation PTFE.

On peut constater également que, selon le nombre d'électrodes 12 que l'on veut utiliser, il est possible de moduler la surface externe entre chaque électrode en utilisant plusieurs séparateurs 18. De cette manière, plusieurs lentilles contiguës peuvent être adjacentes.

Le support longitudinal 10 a la forme d'une tige centrale qui donne à l'ensemble du dispositif une rigidité suffisante permettant d'empiler un nombre important d'électrodes 12 et de séparateurs 18. Cet empilement est complété d'un système de serrage constant, garantissant l'étanchéité du disposititf, malgré un éventuel fluage du matériau constituant les séparateurs 18. Dans ce but, on place à au moins une extrémité du dispositif de mesure un système de serrage 20 avec rattrapage de jeu. Tout ce qui concerne le serrage 20 sera décrit ultérieurement.

Les moyens de connexion électrique des électrodes sont constitués par des fils électriques 22 entourés en hélice autour de la tige centrale 10. On prévoit à cet effet de regrouper ces fils électriques 22 de manière à former un ruban plus facile à installer autour de la tige centrale 10. Le maintien de ce ruban de fils électriques 22 peut être obtenu à l'aide de bagues 24 découpées dans une gaine thermorétractable. Pour chaque électrode, le fil électrique 26 correspondant est séparé du ruban et dénudé au niveau de l'électrode correspondante. A ce niveau, cette partie dénudée est placée à l'extérieur de la bague 28 de gaine thermorétractable qui maintient le ruban, pour être en contact avec l'électrode 30.

La forme lenticulaire des séparateurs 18 peut être obtenue, soit par la fabrication de lentilles d'une seule pièce, soit par juxtaposition de rondelles plates de différents diamètres.

Dans une application particulière, ces séparateurs sont constitués par deux ou quatre bicônes en PTFE.

Un système de serrage 20 est prévu à chaque extrémité. A l'extrémité où se trouve un système de fixation sur la canalisation, symbolisé par une poignée 32, la tige centrale 10 se termine par un filetage 34 sur lequel vient se glisser un écrou 36. Ce dernier sert à l'empilement de rondelles de type "BELLEVILLE" 38 contre l'empilement constitué des séparateurs 18 et des électrodes 12. Le même système, ou un système équivalent, peut être utilisé à l'autre extrémité ; dans ce cas, il peut être entouré d'une pièce terminale 40.

Dans une application particulière, la tige centrale 10 est une tige d'acier du type "STUB", de diamètre 5 mm.

En référence à la figure 3, on prévoit une variante de réalisation de la tige centrale où celle-ci est cannelée de façon longitudinale. Dans ces cannelures 42 sont alors placés les fils électriques 44. Cette réalisation permet également d'utiliser des bagues 24 pour maintenir les fils électriques.

L'avantage de l'utilisation d'une barre métallique centrale confère au dispositif de mesure selon l'invention une rigidité permettant de placer plus de trois électrodes. Un tel dispositif de mesure peut ainsi permettre l'application de plusieurs méthodes électrochimiques de suivi de la corrosion du fluide. Ces méthodes consistent à mesurer la résistance de polarisation ou l'impédance de plusieurs métaux différents, l'évolution comparée des potentiels d'abandon, et l'évolution des courants de couplage.

L'agencement des fils électriques rassemblés en ruban entouré en hélice autour de la barre centrale ou insérés dans des cannelures, permet de préserver le maximum d'espace pour les autres éléments du dispositif.

On peut réaliser ainsi un dispositif de mesure d'un diamètre extérieur maximal d'environ 20 mm, pour permettre son passage à travers une vanne à boisseau, existant déjà sur des installations, la longueur utile du dispositif pouvant alors être environ de 150 mm et être ainsi compatible avec le diamètre d'une canalisation géothermique. Le dispositif de mesure est alors placé perpendiculairement au flux du liquide géothermal.

L'utilisation des séparateurs comme éléments d'étanchéité, permet la suppression du remplissage des espaces vides à l'intérieur du dispositif par un élastomère pour empêcher le liquide de pénétrer à l'intérieur du dispositif de mesure, et propose un dispositif démontable.

Le dispositif selon l'invention a été expérimenté dans une centrale géothermique où le fluide en provenance du sous-sol est relativement chargé en sulfures, sous forme d'hydrogène sulfuré et de sulfures de fer. Après un mois de fonctionnement sans problème, le dispositif a été retiré et démonté pour procéder à divers examens. La canalisation en acier inoxydable, où a été immergé le dispositif, est couverte de dépôts depuis longtemps et son état ne varie pratiquement plus alors que le dispositif, immergé pour la première fois, a mis du temps à acquérir le même état de surface que les éléments correspondants de l'installation. L'enregistrement de la différence de potentiel mesurée entre les diverses électrodes du dispositif et la canalisation montre que les mesure demandent au moins trois semaines pour se stabiliser. Ce résultat souligne l'intérêt du dispositif décrit, puisqu'il permet une longue durée d'utilisation continue dans une installation géothermique. Lors de mesures de résistances de polarisation, avec de l'acier doux et de l'acier inoxydable, effectuées après plus de huit cents heures d'immersion, le rapport des courants électriques mesurés était de l'ordre de 500. Ceci montre que ce dispositif permet de distinguer parfaitement un métal attaquable d'un métal résistant.

Il faut ajouter que toutes les méthodes électrochimiques de mesure de corrosion sont utilisables, aussi bien les méthodes stationnaires que les méthodes transitoires.

## Revendications

1. Dispositif de mesure en continu par électrochimie de la vitesse de corrosion par un fluide comprenant :

— un support longitudinal (10),

— au moins deux électrodes (12) placées sur le support longitudinal (10) de diamètre déterminé et étant en contact avec le fluide,

— des moyens (22 ; 26 ; 44) de connexion électrique desdites électrodes (12) protégés du fluide, et

— des séparateurs (18) placés entre les électrodes (12) pour les isoler électriquement,

le dispositif étant caractérisé en ce que lesdits séparateurs (18) sont en contact avec le fluide, ont une partie dont le diamètre maximal est plus important que celui des électrodes (12) et une surface extérieure discontinue, pour créer une discontinuité des éventuels dépôts de matériaux conducteurs sur la surface externe du dispositif.

2. Dispositif selon la revendication 1, dont la surface externe est de révolution, caractérisé en ce que les séparateurs (18) ont une forme lenticulaire.

3. Dispositif selon la revendication 1 ou 2, caractérisé en ce qu'au moins un séparateur (18) est formé de plusieurs lentilles contiguës.

4. Dispositif selon l'une quelconque des revendications précédentes, caractérisé en ce que les séparateurs (18) et les électrodes (12) constituent un empilement, un dispositif de serrage (20) avec rattrapage de jeu étant prévu à au moins une extrémité pour assurer le maintien et conserver l'étanchéité du dispositif.

5. Dispositif selon l'une quelconque des revendications précédentes, caractérisé en ce que le support longitudinal (10) est une tige centrale autour de laquelle est enroulé en hélice un ruban de fils électriques (22) constituant lesdits moyens de connexion électrique des électrodes (12).

6. Dispositif selon l'une quelconque des revendications 1 à 4, caractérisé en ce que le support longitudinal (10) est une tige centrale avec des cannelures (42) longitudinales dans lesquelles sont logés les fils électriques (44).

7. Dispositif selon la revendication 5 ou 6, caractérisé en ce que lesdits fils électriques (22, 44) sont maintenus par des bagues (24 ; 28) de gaine thermorétractable, le fil électrique (26) de chaque électrode (12, 30) étant coupé et dénudé au niveau de ladite électrode (12, 30), la partie dénudée de ce fil électrique (26) étant placée au-dessus de la bague (28) de gaine correspondante pour être en contact avec l'électrode correspondante (12, 30).

8. Dispositif selon l'une quelconque des revendications précédentes, caractérisé en ce que les séparateurs (18) sont en PTFE.

## Patentansprüche

1. Vorrichtung zur kontinuierlichen Messung der Korrosionsgeschwindigkeit durch eine Flüssigkeit mittels einem elektrochemischen Verfahren mit :

— wenigstens einem longitudinalen Träger (10),

— wenigstens zwei Elektroden (12) mit einem vorgegebenen Durchmesser, die auf dem longitudinalen Träger (10) angeordnet sind und in Kontakt mit der Flüssigkeit stehen,

— Vorrichtungen (22 ; 26 ; 44) zur elektrischen Verbindung der Elektroden (12), die vor der Flüssigkeit geschlitzt sind, und

— Trennanordnungen (18), die zwischen den Elektroden (12) angeordnet sind, um sie elektrisch zu isolieren,

wobei die Vorrichtung dadurch gekennzeichnet ist, daß die Trennanordnungen (18) in Kontakt mit der Flüssigkeit stehen, einen Bereich besitzen, dessen maximaler Durchmesser größer ist als der der Elektroden (12), und eine diskontinuierliche, äußere Oberfläche besitzen, um eine Diskontinuität für die möglichen Ablagerungen von leitfähigem Material auf der äußeren Oberfläche der Vorrichtung zu erzeugen.

2. Vorrichtung nach Anspruch 1, deren äußere Oberfläche eine Drehoberfläche ist, dadurch gekennzeichnet, daß die Trennanordnungen (18) eine Linsenform besitzen.

3. Vorrichtung nach Anspruch 1 oder 2, dadurch gekennzeichnet, daß eine Trennvorrichtung (18) aus mehreren, aneinander stoßenden Linsen besteht.

4. Vorrichtung nach einem der vorhergehenden Ansprüche, dadurch gekennzeichnet, daß die Trennvorrichtungen (18) und die Elektroden (12) einen Stapel bilden, wobei eine nachstellbare Klemmvorrichtung (20) an wenigstens einem Ende vorgesehen ist, um den Erhalt sicherzustellen und die Dichtigkeit der Vorrichtung zu bewahren.

5. Vorrichtung nach einem der vorhergehenden Ansprüche, dadurch gekennzeichnet, daß der longitudinale Träger (10) eine zentraler Stab ist, um den eine Schraubung aus einem Band aus elektrischen Leitern (22) gewunden ist, welches die elektrischen Verbindungsvorrrichtungen für die Elektroden (12) bildet.

6. Vorrichtung nach einem der Ansprüche 1 bis 4, dadurch gekennzeichnet, daß der longitudinale Träger (10) ein zentraler Stab mit longitudinalen Riffeln (42) ist, in denen die elektrischen Leiter (44) angeordnet sind.

7. Vorrichtung nach Anspruch 5 oder 6, dadurch gekennzeichnet, daß die elektrischen Leiter (22, 44) von Ringen (22 ; 28) mit thermisch schrumpfender Hülle gehalten werden, wobei der elektrische Leiter (26) jeder Elektrode (12, 30) auf der Hohe der Elektrode (12, 30) abgeschnitten und bloßgelegt ist, wobei der bloßgelegte Teil dieses elektrischen Leiters (26) über dem entsprechenden Ring (28) mit einer Hülle angeordnet ist, um in Kontakt mit der entsprechenden Elektrode (12, 30) zu sein.

8. Vorrichtung nach einem der vorhergehenden Ansprüche, dadurch gekennzeichnet, daß die Trennanordnungen (18) aus PTFE bestehen.

## Claims

1. Device for continuous measurement by means of electrochemistry of the rate of corrosion by a fluid, comprising :
  — a lengthwise support (10),
  — at least two electrodes (12) placed on the lengthwise support (10) of specified diameter and in contact with the fluid,
  — means (22 ; 26 ; 44) for electrical connection of the said electrodes (12) which are protected from the fluid, and
  — separators (18) placed between the electrodes (12) to insulate them electrically,
  the device being characterised in that the said separators (18) are in contact with the fluid, have a part whose maximum diameter is larger than that of the electrodes (12) and a noncontinuous outer surface, to create a discontinuity of the possible deposits of conductive materials on the outer surface of the device.

2. Device according to Claim 1, whose outer surface is one of revolution, characterised in that the separators (18) are of lenticular shape.

3. Device according to Claim 1 or 2, characterised in that at least one separator (18) is made up of a number of adjoining lenses.

4. Device according to any one of the preceding claims, characterised in that the separators (18) and the electrodes (12) constitute a stack, a clamping device (20) with compensation of play being provided at at least one end to ensure the integrity and to maintain the leakproofing of the device.

5. Device according to any one of the preceding claims, characterised in that the lengthwise support (10) is a central rod around which a tape of electrical wires (22) is wound in a spiral, forming the said means of electrical connection of the electrodes (12).

6. Device according to any one of Claims 1 to 4, characterised in that the lengthwise support (10) is a central rod with lengthwise grooves (42) in which the electrical wires (44) are housed.

7. Device according to Claim 5 or 6, characterised in that the said electrical wires (22, 44) are held by rings (24 ; 28) of a heat-shrinkable sheath, the electrical wire (26) of each electrode (12, 30) being cut and laid bare at the said electrode (12, 30), the bare part of this electrical wire (26) being placed above the corresponding sheath ring (28) to be in contact with the corresponding electrode (12, 30).

8. Device according to any one of the preceding claims, characterised in that the separators (18) are made of PTFE.

FIG. 1

FIG. 2

FIG. 3